# EUROPEAN PATENT SPECIFICATION

(11) **EP 1 885 106 B1**
(45) Date of publication and mention of the grant of the patent: **28.09.2011**
(21) Application number: 07113727.7
(22) Date of filing: 02.08.2007
(51) Int. Cl.: H04M 1/2745, G06F 3/01

(54) **Motion-based user interface for handheld**
Bewegungsbasierte Benutzerschnittstelle für ein tragbares Gerät
Interface utilisateur à mouvement pour portable

(30) Priority: 03.08.2006 US 821326 P
(43) Date of publication of application: 06.02.2008
(73) Proprietor: RESEARCH IN MOTION LIMITED, Waterloo, Ontario N2L 3W8 (CA)
(72) Inventor: Sohm, Mark, Guelph Ontario N1E 6R3 (CA); Bredin, Robert, Guelph Ontario N1G 4R8 (CA); Wilhelm, Kathryn Ann, Guelph Ontario N1E 4A8 (CA)
(74) Representative: MERH-IP Matias Erny Reichl Hoffmann

(56) References cited:
- EP-A- 1 635 543
- WO-A-2004/082248
- WO-A-2005/103863
- WO-A-2005/107153
- GB-A- 2 347 593

## Description

### BACKGROUND

This relates generally to a motion-based user interface for a mobile wireless communications device.

A mobile wireless communications device typically has one or more of the following which serve as a user interface for the device: contact switches (at least some of which may be arrayed as keys on a keyboard), rocker switches, a thumb wheel, and a touch screen.

These typical user interfaces may be difficult to manage, especially where a user is occupied so as not to be able to look at the user interface, either at all or for longer than a brief time period.

Therefore, there remains a need for an improved user interface.

WO-A-2005/107153 discloses a motion controlled hand held device. In this proposed device, gestures of the user are recorded. The device then receives function mapping information from the user to enable it to associate a recorded, gesture with functions, operations or tasks that the user desires the gesture to command.

GB-A-2347593 discloses the use of motion to input information into a radio telephone. Motion patterns may be assigned to functions such as lock, unlock, speed dial and scroll through memory.

Similarly, WO-A-2004/082248 discloses configurable control of a mobile device by means of movement patterns, in which device functions are assigned to movement patterns.

### GENERAL

A mobile wireless communications device may be arranged to allow for the entry of a motion capture command from a user interface. After receiving such a command, the device generates a recorded motion from output signals from a motion sensor incorporated in the device. A user may then identify a particular contact record through the user interface whereupon the device will associate the contact with the recorded motion.

Accordingly, there may be provided a method for operating a mobile wireless communications device, on which are stored a plurality of applications having user entry fields, the method comprising: after receipt of a motion capture command from a user interface, generating a recorded motion from output signals from a motion sensor; receiving an identification of a contact through said user interface; associating said contact with said recorded motion, said contact comprising a stored contact record with a name field and a telephone number field and/or an email field; and after launching any application of said plurality of applications responsive to a request from said user interface, upon sensing said recorded motion from output signals from said motion sensor, populating user entry fields of an active screen of said application with data from like fields of the associated contact, wherein the user entry fields that are populated are dependent upon the launched application and the active screen.

In another aspect there may be provided a mobile wireless communications device comprising: a motion sensor; a user interface; a memory configured to store a plurality of applications having user entry fields, a plurality of contacts, a plurality of recorded motions and, for each recorded motion, an association between said each recorded motion and a contact of said plurality of contacts, each of said plurality of contacts comprising a record with a name field and a telephone number field and/or an email field; a processor operatively connected to an output of said motion sensor and coupled for communication with said memory and with said user interface, said processor for: upon receipt of a motion capture command from said user interface, entering a motion capture mode; during said motion capture mode, generating a recorded motion from output signals from said motion sensor; receiving an identification of one contact of said plurality of contacts through said user interface; storing in memory an association between said one contact and said recorded motion; and after launching an active screen of any of said plurality of applications responsive to a request from said user interface, upon sensing said recorded motion from output signals from said motion sensor, populating user entry fields of said active screen of said application with data from like fields of the associated contact, wherein the user entry fields that are populated are dependent upon the launched application and the active screen.

### BRIEF DESCRIPTION OF THE DRAWINGS

In the figures which illustrate example embodiments,

**FIG. 1** is a front view of a mobile wireless communications device suitable for use with the described embodiments, and

**FIG. 2** is a schematic view of the device of **FIG. 1****,**

**FIG. 2A** is a block diagram of an exemplary contact record,

**FIG. 3** is a flow diagram illustrating operation of the processor of the device of **FIG. 1****,**

**FIG. 4** is a schematic diagram illustrating a possible processing of a curve produced by the operation of **FIG. 3****,**

**FIGS. 5** and **6** are flow diagrams illustrating operation of the processor of the device of **FIG. 1****,**

**FIG. 7** is a screen shot of an exemplary e-mail composition screen, and

**FIG. 8** is a flow diagram illustrating the operation of a processor of an alternative embodiment of the device.

### DESCRIPTION OF PREFERRED EMBODIMENTS

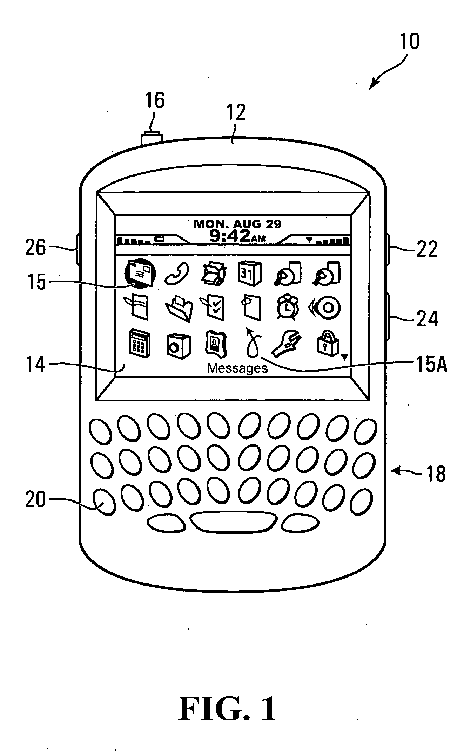

Turning to **FIG. 1****,** mobile wireless communications device **10** may have a housing **12,** a display **14,** a camera **16**, and a user interface **18** having a keyboard **20,** a thumb wheel **22,** an escape key **24**, and a motion key **26.** The display **14** may be a full graphic Liquid Crystal Display (LCD) and may display a number of icons **15** representative of available applications on the device.

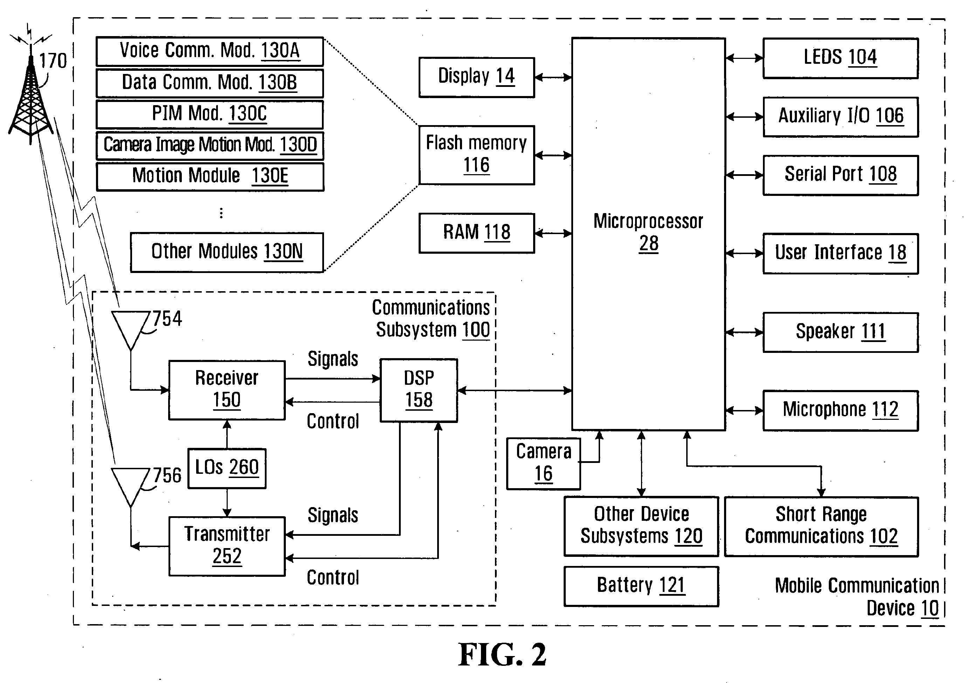

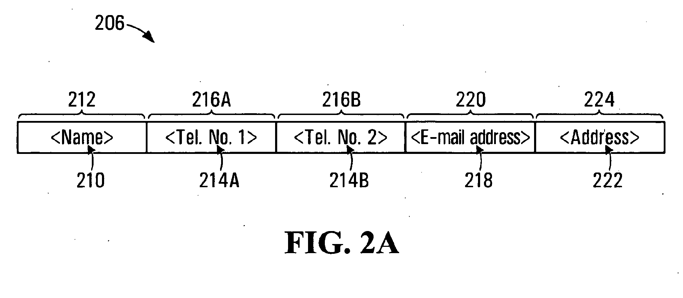

With reference to **FIG. 2****,** a processing device (a microprocessor **28)** is shown schematically as coupled between the user interface **18** and the display **14.** The microprocessor **28** controls the operation of the display **16,** as well as the overall operation of the mobile device **10,** in response to the user interface.

The housing may be elongated vertically, or may take on other sizes and shapes (including clamshell housing structures). The keyboard may include a mode selection key, or other hardware or software for switching between text entry and telephony entry.

In addition to the microprocessor **28,** other parts of the mobile device **10** are shown schematically in **FIG. 2****.** These may include: a communications subsystem **100;** a short-range communications subsystem **102;** the user interface **18** and the display **14,** along with other input/output devices including a set of auxiliary I/O devices **106,** a serial port **108,** camera **16** a speaker **111** and a microphone **112;** as well as memory devices including a flash memory **116** and a Random Access Memory (RAM) **118;** and various other device subsystems **120.** The mobile device **10** may have a battery **121** to power the active elements of the mobile device **10.** The mobile device **10** is preferably a two-way radio frequency (RF) communication device having voice and data communication capabilities. In addition, the mobile device **10** preferably has the capability to communicate with other computer systems via the Internet.

Operating system software executed by the microprocessor **28,** is preferably stored in a persistent store, such as the flash memory **116,** but may be stored in other types of memory devices, such as a read only memory (ROM) or similar storage element. In addition, system software, specific device applications, or parts thereof, may be temporarily loaded into a volatile store, such as the RAM **118.** Communication signals received by the mobile device may also be stored to the RAM **118.**

The microprocessor **28,** in addition to its operating system functions, enables execution of software applications on the mobile device **10.** A predetermined set of software applications that control basic device operations, such as a voice communications module **130A** and a data communications module **130B,** may be installed on the mobile device **10** during manufacture. In addition, a personal information manager (PIM) application module **130C** may also be installed on the mobile device **10** during manufacture. The voice communication module **130A** is responsible for presenting a user interface screen to allow establishment and termination of voice communications. The PIM application is preferably capable of organizing and managing data items, such as contacts, e-mail, calendar events, voice mails, appointments, and task items. The PIM application is also preferably capable of sending and receiving data items via a wireless network **170.** In this regard, the PIM application is responsible for presenting user interface screens for displaying stored data items, such as contacts and e-mail, and for sending e-mail. Preferably, the data items managed by the PIM application are seamlessly integrated, synchronized and updated via the wireless network **170** with the device user's corresponding data items stored or associated with a host computer system. As well, a camera image motion module **130D** and a motion module **130E** may be installed on the mobile device **10** during manufacture. Additional software modules, illustrated as another software module **130N,** may also be installed during manufacture.

Communication functions, including data and voice communications, are performed through the communication subsystem **100,** and possibly through the short-range communications subsystem **102.** The communication subsystem **100** includes a receiver **150,** a transmitter **152** and one or more antennae, illustrated as a receive antenna **154** and a transmit antenna **156.** In addition, the communication subsystem **100** also includes a processing module, such as a digital signal processor (DSP) **158,** and local oscillators (LOs) **160.** The specific design and implementation of the communication subsystem **100** is dependent upon the communication network in which the mobile device **10** is intended to operate. For example, the communication subsystem **100** of the mobile device **10** may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communications Service (PCS), Global System for Mobile Communications (GSM), etc. Other types of data and voice networks, both separate and integrated, may also be utilized with the mobile device **10.**

Network access requirements vary depending upon the type of communication system. For example, in the Mobitex™ and DataTAC™ networks, mobile devices are registered on the network using a unique Personal Identification Number (PIN) associated with each device. In GPRS networks, however, network access is associated with a subscriber or user of a device. A GPRS device therefore requires a subscriber identity module, commonly referred to as a Subscriber Identity Module (SIM) card, in order to operate on a GPRS network.

When required network registration or activation procedures have been completed, the mobile device **10** may send and receive communication signals over the communication network **170.** Signals received from the communication network **170** by the receive antenna **154** are routed to the receiver **150,** which provides for signal amplification, frequency down conversion, filtering, channel selection, etc., and may also provide analog to digital conversion. Analog-to-digital conversion of the received signal allows the DSP **158** to perform more complex communication functions, such as demodulation and decoding. In a similar manner, signals to be transmitted to the network **170** are processed (e.g., modulated and encoded) by the DSP **158** and are then provided to the transmitter **152** for digital to analog conversion, frequency up conversion, filtering, amplification and transmission to the communication network **170** (or networks) via the transmit antenna **156.**

In addition to processing communication signals, the DSP **158** provides for control of the receiver **150** and the transmitter **152.** For example, gains applied to communication signals in the receiver **150** and the transmitter **152** may be adaptively controlled through automatic gain control algorithms implemented in the DSP **158.**

In a data communication mode, a received signal, such as a text message or web page download, is processed by the communication subsystem **100** and is input to the microprocessor **28.** The received signal is then further processed by the microprocessor **28** for an output to the display **14,** or alternatively to some other auxiliary I/O devices **106.** A device user may also compose data items, such as e-mail messages, using the keyboard **20** (**FIG. 1**) and other elements of the user interface **18.** The composed data items may then be transmitted over the communication network **170** via the communication subsystem **100.**

In a voice communication mode, overall operation of the device is substantially similar to the data communication mode, except that received signals are output to a speaker **111,** and signals for transmission are generated by a microphone **112.** Alternative voice or audio I/O subsystems, such as a voice message recording subsystem, may also be implemented on the device **10.** In addition, the display **14** may also be utilized in voice communication mode, for example, to display the identity of a calling party, the duration of a voice call, or other voice call related information.

The short-range communications subsystem **102** enables communication between the mobile device **10** and other proximate systems or devices, which need not necessarily be similar devices. For example, the short-range communications subsystem may include an infrared device and associated circuits and components, or a Bluetooth™ communication module to provide for communication with similarly-enabled systems and devices.

The motion module **130E** stored in flash memory **116** may include a motion recording application which captures a motion of device **10** and associates it with a particular contact stored in memory based on user inputs via user interface **18.** **FIG. 2A** illustrates an exemplary contact record with a name **210** stored in a name field **212**, telephone numbers **214a**, **214b** stored in telephone number fields **216a, 216b,** an e-mail address **218** stored in an e-mail field **220,** and an address **222** stored in an address field **224.** Other exemplary contact records may have additional fields, such as fields for further e-mail addresses, fields for further telephone numbers, a field for a web address, and so on. Other exemplary contact records may also have a lesser number of fields, such as a field only for a name and a telephone number.

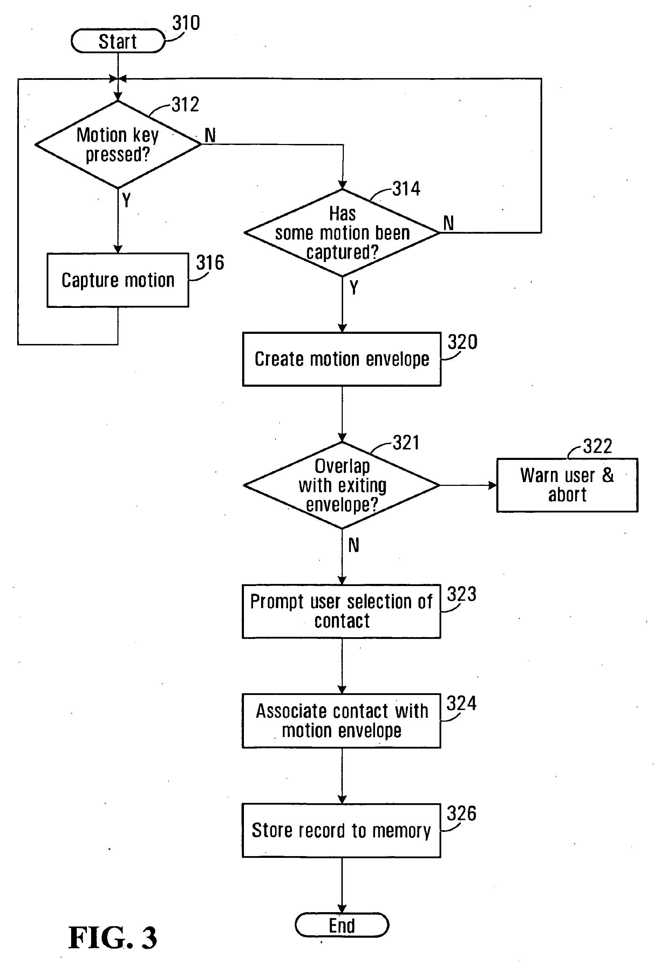

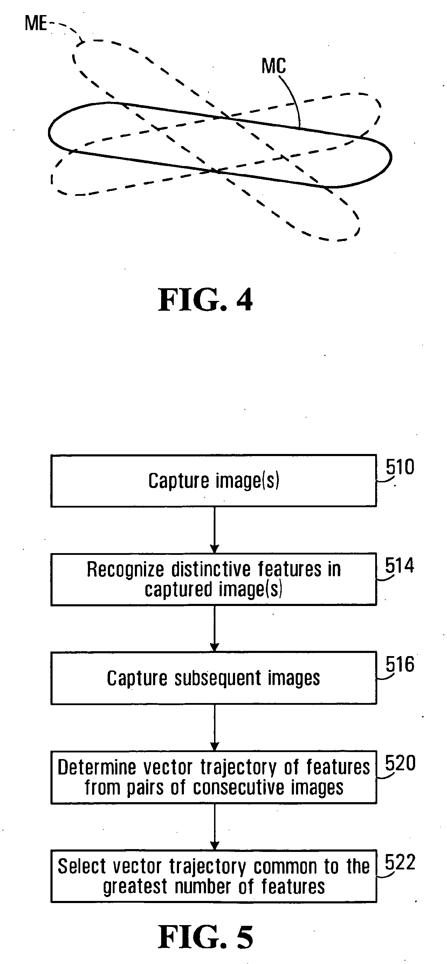

The motion recording application may be launched by processor **28** when a pre-defined command is entered via user interface **18.** For example, display **14** may have motion recording icon **15A** which, when selected, results in processor **28** undertaking the steps outlined in **FIG. 3****.** Turning to **FIG. 3****,** on launch **(310),** the processor waits until the motion key **26 (****FIG. 1****)** is pressed **(312,** 314). Once this key is pressed, the processor captures subsequent motion of the device **10 (316)** (as is described more fully hereafter) until key **26** is released. To enhance accuracy, optionally, a user could be required to input the motion plural times and an average taken as the captured motion. Once the motion key is released **(314),** the processor may create a motion envelope as the recorded motion **(320).** More specifically, the motion envelope may be a range of different motions centered about the captured motion. For example, with reference to **FIG. 4**, if the captured motion **MC** was a close-to-circular oval shape in a plane +3° from the horizontal, the motion envelope **ME** may encompass similar shapes from -7° to +13° from the horizontal. The processor then compares the motion envelope with any previously created motion envelope and if there is an overlap, **s**uch that one motion could be mistaken for the other (**321**)**,** the processor warns the user and aborts the operation **(322).** Assuming there is no overlap with an existing motion envelope, the processor then prompts the user to select a contact via user interface **18 (323).** This selected contact is associated with the motion envelope in memory, such as by creation of a record which is stored to memory **(324, 326).**

In this way, a user may, for example, associate a circle subscribed by device **10** in a horizontal plane with a particular contact.

**FIG. 5** details the record motion step **316** of **FIG. 3****.** Turning to **FIG. 5****,** the processor captures an initial image, or set of images, from the camera **16 (510).** Then (under control of camera image motion module **130D**), the processor recognises a few distinctive features in the captured image(s) **(514).** A distinctive feature may be, for example, a circle, triangular, or rectangular shape in the image. The processor then captures subsequent images from the camera **(516)** and, where a given distinctive feature persists in the subsequent images, determines a vector trajectory for the given distinctive features from pairs of consecutive images **(520).** It may be expected that some of the features will be part of static background in the environment whereas others may be part of something moving in the environment. The static features will share the same, or a very similar, vector trajectory. Thus, the processor may select as the vector trajectory for device **10** that of the vector trajectory common to the greatest number of features **(522).** In this regard, a user may be instructed to point the camera toward static environment during motion capture to enhance the likelihood of capturing the true motion of the device **10.**

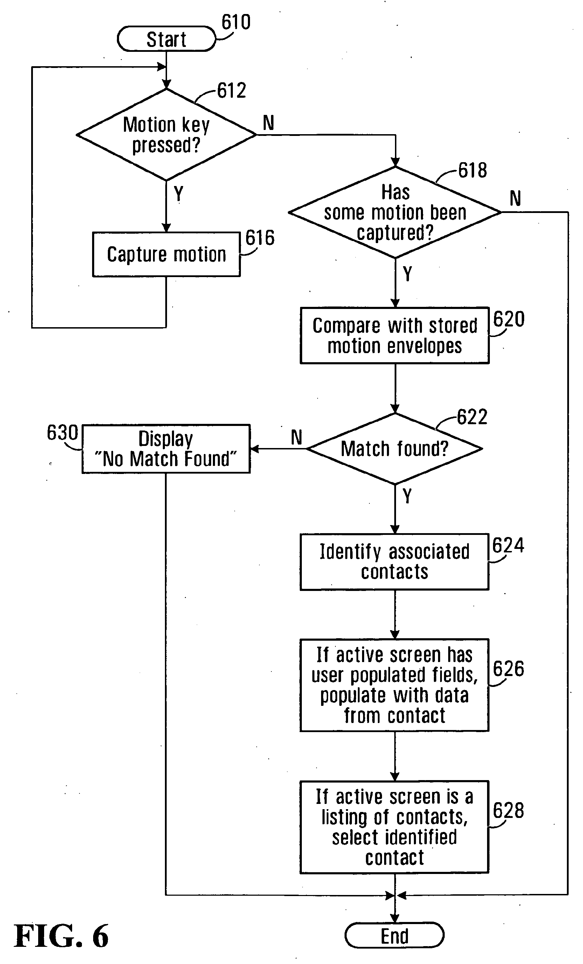

If, when the motion recording application has not been launched, the motion key **26** is pressed, motion module 130E may launch a motion replay application wherein a motion replay mode is entered, as detailed in **FIG. 6****.** Turning to **FIG. 6****,** after motion key **26** is pressed **(612),** the processor captures the motion of device **10 (616)** in the same manner as described in conjunction with **FIG. 5****.** After the motion key **26** is released, if some motion has been captured **(618),** this captured motion is compared with stored motion envelopes **(620).** On finding a match **(622),** the processor identifies the contact associated with the matching motion envelope (**624**). If the active screen of device **10** has user entry fields, the processor then populates these fields with data from any like fields of the associated contact **(626).** Alternatively, if the active screen of device **10** is a listing of contacts, the identified contact is highlighted on the screen as the active contact **(628)** such that further user input operates upon this active contact. If no match is found, the user is so informed **(630),** allowing the user to try again.

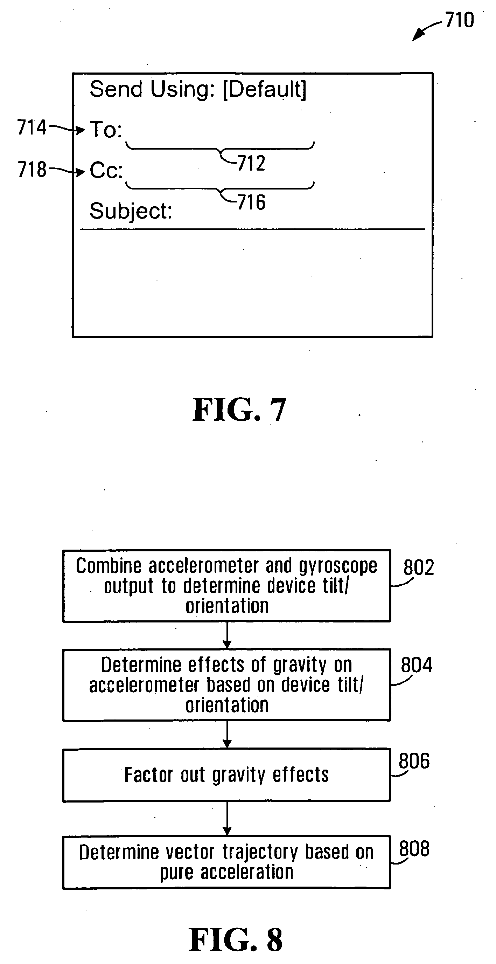

For example, a user, through the user interface **18,** may select the email application of the PIM module **130C** and then request the opening of an e-mail composition screen so that this is the active screen of the device **10:** **FIG. 7** illustrates an exemplary such screen. Turning to **FIG. 7****,** e-mail composition screen **710** has a primary recipient field **712** headed with a "To:" label **714** and a cc recipient field **716** headed with a "Cc:" label **718.** If, thereafter, the user presses the motion key **26** to enter the motion replay mode, the device will then capture its subsequent motion and the processor will compare this motion with the database of motion envelopes. On finding a match, the processor will retrieve the associated contact and extract the e-mail address **218** from the e-mail field **220.** This extracted address will then be used to populate the first empty recipient field **(712** or **716)** in the e-mail composition screen **710.** The user could repeat the process to populate the next empty recipient field.

As a further example, a user could select a telephone call initiation application of the voice communication module **130A.** This may result in a display of a screen with a field for entry of a destination number. Through motion entry, the user may select a particular contact whereupon the processor will populate the destination number field with a telephone number from the identified contact record. In this regard, if the contact record stores more than one telephone number, the user may be asked to select between the stored numbers.

As another example, a user could select a word processing application of one of the other modules **130N** and launch a blank screen of the word processing application as the active screen. Through motion entry, the user may select a particular contact whereupon the processor may port the name and address stored in the contact record to the blank document, formatted as an address for a letter. In this instance, the entire blank document may be considered as a user entry field.

From the foregoing, it will be apparent that the camera, in conjunction with the camera image motion module **130D,** acts as a motion sensor. In other embodiments, a different motion sensor could be used. For example, a small electromechanical motion sensor could be used, such as the three axis MEMS motion sensor described in US6,504,385 to Hartwell et al., the contents of which are hereby incorporated herein by reference. Alternatively, one or more accelerometers or gyroscopes could be used individually or in combination.

For example, in one embodiment, the motion sensor may comprise a three-axis accelerometer and a gyroscope. In such an embodiment, the record motion step **316** of **FIG. 3** could be as illustrated in **FIG. 8****.** Referring to that figure, the output of the accelerometer and gyroscope may first be combined to determine the tilt or orientation of the device **10 (802).** Based on the device orientation, the effects of gravity upon the accelerometer in each of the three axes may be determined **(804).** These effects may then be factored out of the accelerometer output in order to avoid any possible misinterpretation of gravity as acceleration **(806).** With the determined pure linear acceleration in each of the three axes, a vector trajectory for device **10** can be determined **(808).**

Rather than developing motion envelopes from captured motions, other techniques could be employed to compare captured motions with an input motion in a way which would accommodate user variability. For example, fuzzy logic could be used to "fuzzify" certain parameters of the captured motions.

Rather than using a motion key **26,** motion recording and playback could be initiated from a selection menu accessed by user interface **18.** In such instance, motion capture may be announced with a beep a short time after selection of motion recording to allow a user time to prepare to commence the motion. During motion capture, the processor may temporarily configure a key on user interface **18** as a hot key for use by the user to signal the end of motion capture. The same selection menu could be used to signal the beginning of motion playback and the same hot key used to signal the end of the motion playback. Since this approach requires that a user focus more attention on the user interface **18** when using motion entry, this approach is not preferred.

Other modifications will be apparent to those skilled in the art and, therefore, the embodiments are defined in the claims.

### COPYRIGHT NOTICE

A portion of the disclosure of this patent document contains material which is subject to copyright protection. The copyright owner has no objection to the facsimile reproduction by any one of the patent document or patent disclosure, as it appears in a Patent Office patent file or records, but otherwise reserves all copyright rights whatsoever.

## Claims

1. A method for operating a mobile wireless communications device (10) on which are stored a plurality of applications having user entry fields, the method comprising:
after receipt (312) of a motion capture command from a user interface (18), generating a recorded motion (320) from output signals from a motion sensor (16 and 130D);
receiving an identification of a contact through said user interface (18);
associating (324) said contact with said recorded motion, said contact comprising a stored contact record (206) with a name field (212) and a telephone number field (216A, 216B) and/or an email field (220); and
after launching any application of said plurality of applications responsive to a request from said user interface (18), upon sensing said recorded motion from output signals from said motion sensor (16 and 130D), populating user entry fields of an active screen of said application with data from like fields of the associated contact, wherein the user entry fields that are populated are dependent upon the launched application and the active screen.

2. The method of claim 1 wherein said user interface (18) comprises at least one switch (26) and wherein said motion capture command comprises a switched signal from one or more of said at least one switch (26).

3. The method of any one of the preceding claims further comprising monitoring for said recorded motion after receiving a motion replay command.

4. The method of claim 3 when dependent on claim 2 wherein said motion replay command comprises a switched signal from one or more of said at least one switch (26).

5. The method of any one of the preceding claims wherein said motion sensor output signals indicate a motion in three-dimensional space.

6. The method of any one of the preceding claims further comprising generating said motion sensor output signals based on a change of an image sensed by a camera (16).

7. The method of any one of the preceding claims wherein one of said applications is an email application, said active screen is an email composition screen (710) and said populating comprises;
inputting an email address (218) stored in said contact in a recipient field (714) of said email composition screen (710).

8. The method of any one of the preceding claims further comprising:
after receipt of a contact display request from said user interface, displaying a list of contacts;
upon sensing said recorded motion from output signals from said motion sensor (16 and 130D), selecting (628) said contact from said list of contacts.

9. The method of any one of the preceding claims wherein one of said applications is a telephone initiation application, said active screen is a telephone number entry screen and said populating comprises inputting a telephone number (214A, 214B) stored in said contact in a telephone number field of said telephone number entry screen.

10. The method of any preceding claim wherein said contact record (206) further comprises an address field (224).

11. The method of claim 10 wherein one of said applications is a word processing application, said active screen is
a blank document screen and said populating comprises inputting a name (210) stored in said contact name field and an address (222) stored in said address field to said blank document screen formatted as a recipient address for a letter.

12. A mobile wireless communications device comprising (10):
a motion sensor (16 and 130D);
a user interface (18);
a memory (116, 118) configured to store a plurality of applications having user entry fields, a plurality of contacts, a plurality of recorded motions and, for each recorded motion, an association between said each recorded motion and a contact of said plurality of contacts, each of said plurality of contacts comprising a record (206) with a name field (212) and a telephone number field (216A, 216B) and/or an email field (220);
a processor (28) operatively connected to an output of said motion sensor (16 and 130D) and coupled for communication with said memory (116, 118) and with said user interface (18), said processor (28) for:
upon receipt of a motion capture command from said user interface (18), entering a motion capture mode;
during said motion capture mode, generating a recorded motion from output signals from said motion sensor (16 and 130D);
receiving an identification of one contact of said plurality of contacts through said user interface (18);
storing in memory (116, 118) an association between said one contact and said recorded motion; and
after launching an active screen of any of said plurality of applications responsive to a request from said user interface (18), upon sensing said recorded motion from output signals from said motion sensor (16 and 130D), populating user entry fields of said active screen of said application with data from like fields of the associated contact, wherein the user entry fields that are populated are dependent upon the launched application and the active screen.

13. The device of claim 12wherein said processor (28) is further for monitoring for said recorded motion after receiving a motion replay command.

14. A computer readable medium (116, 118) storing computer readable instructions executable by a processor (28) of a computing device (10) to cause said device (10) to implement all the steps of the method of any one of claims 1 to 11.

## Patentansprüche

1. Verfahren zum Betreiben einer mobilen drahtlosen Kommunikationsvorrichtung (10), auf der eine Vielzahl von Anwendungen mit Benutzereingabefeldern gespeichert ist, wobei das Verfahren aufweist:
nach Empfang (312) eines Bewegungserfassungsbefehls von einer Benutzerschnittstelle (18), Erzeugen einer aufgezeichneten Bewegung (320) aus Ausgabesignalen von einem Bewegungssensor (16 und 130D);
Empfangen einer Identifikation eines Kontakts über die Benutzerschnittstelle (18);
Zuordnen (324) des Kontakts zu der aufgezeichneten Bewegung, wobei der Kontakt einen gespeicherten Kontakt-Datensatz (206) mit einem Namensfeld (212) und einem Telefonnummernfeld (216A, 216B) und/oder einem Email-Feld (220) aufweist; und
nach einem Starten einer Anwendung aus der Vielzahl von Anwendungen in Reaktion auf eine Anforderung von der Benutzerschrdttstelle (18), bei Erfassen der aufgezeichneten Bewegung aus Ausgabesignalen von dem Bewegungssensor (16 und 130D), Befüllen von Benutzereingabefeldern eines aktiven Bildschirms der Anwendung mit Daten aus ähnlichen Feldern des zugehörigen Kontakts, wobei die Benutzereingabefelder, die befüllt werden, von der gestarteten Anwendung und dem aktiven Bildschirm abhängig sind.

2. Verfahren gemäß Anspruch 1, wobei die Benutzerschnittstelle (18) zumindest einen Schalter (26) aufweist und wobei der Bewegungserfassungsbefehl ein geschaltetes Signal von einem oder mehreren des zumindest einen Schalters (26) aufweist.

3. Verfahren gemäß einem der vorhergehenden Ansprüche, das weiter aufweist ein Überwachen hinsichtlich der aufgezeichneten Bewegung nach einem Empfangen eines Bewegungswiedergabebefehls.

4. Verfahren gemäß Anspruch 3, wenn abhängig von Anspruch 2, wobei der Bewegungswiedergabebefehl ein geschaltetes Signal von einem oder mehreren des zumindest einen Schalters (26) aufweist.

5. Verfahren gemäß einem der vorhergehenden Ansprüche, wobei die Ausgabesignale des Bewegungssensors eine Bewegung im dreidimensionalen Raum anzeigen.

6. Verfahren gemäß einem der vorhergehenden Ansprüche, das weiter aufweist ein Erzeugen der Ausgabesignale des Bewegungssensors basierend auf einer Änderung eines Bilds, erfasst durch eine Kamera (16).

7. Verfahren gemäß einem der vorhergehenden Ansprüche, wobei eine der Anwendungen eine Email-Anwendung ist, der aktive Bildschirm ein Email-Verfassen-Bildschirm (710) ist und das Befüllen aufweist:
Eingeben einer Email-Adresse (218), die in dem Kontakt gespeichert ist, in ein Adressat-Feld (714) des Email-Verfassen-Bildschirms (710).

8. Verfahren gemäß einem der vorhergehenden Ansprüche, das weiter aufweist:
nach Empfang einer Kontaktanzeigeanforderung von der Benutzerschnittstelle, Anzeigen einer Liste von Kontakten;
bei Erfassen der aufgezeichneten Bewegung von Ausgabesignalen des Bewegungssensors (16 und 130D), Auswählen (628) des Kontakts aus der Liste von Kontakten.

9. Verfahren gemäß einem der vorhergehenden Ansprüche, wobei eine der Anwendungen eine Telefoninitiierungsanwendung ist, der aktive Bildschirm ein Telefonnummerneingabebildschirm ist und das Befüllen aufweist ein Eingeben einer Telefonnummer (214A, 214B), die in dem Kontakt gospeichert ist, in ein Telefonfonnummernfield des Telefonnummerneingabebildschirms.

10. Verfahren gemäß einem vorhergehenden Anspruch, wobei der Kontakt-Datensatz (206) weiter ein Adressfeld (224) aufweist.

11. Verfahren gemäß Anspruch 10, wobei eine der Anwendungen eine Textverarbeitungsanwendung ist, der aktive Bildschirm ein "leeres Dokument"-Bildschirm ist und das Befüllen aufweist ein Eingeben eines Namens (210), der in dem Kontaktnamenfeld gespeichert ist, und einer Adresse (222), die in dem Adressfeld gespeichert ist, in den "leeres Dokument"-Bildschirm, formatiert als eine Empfängeradresse für einen Brief.

12. Mobile drahtlose Kommunikationsvorrichtung, die aufweist (10):
einen Bewegungssensor (16 und 130D);
eine Benutzerschnittstelle (18);
einen Speicher (116, 118), der konfiguriert ist zum Speichern einer Vielzahl von Anwendungen mit Benutzereingabefeldern, einer Vielzahl von Kontakten, einer Vielzahl von aufgezeichneten Bewegungen und, für jede aufgezeichnete Bewegung, einer Zuordnung zwischen jeder aufgezeichneten Bewegung und einem Kontakt aus der Vielzahl von Kontakten, wobei jeder der Vielzahl von Kontakten einen Datensatz (206) aufweist mit einem Namensfeld (212) und einem Telefonnummernfeld (216A, 216B) und/oder einem Email-Feld (220);
einen Prozessor (28), der betriebsfähig verbunden ist mit einer Ausgabe des Bewegungssensors (16 und 130D) und zur Kommunikation mit dem Speicher (116, 118) und der Benutzerschnittstelle (18) verbunden ist, wobei der Prozessor (28) vorgesehen ist zum:
bei Empfang eines Bewegungserfassungsbefehls von der Benutzerschnittstelle (18), Eingehen eines Bewegungserfassungsmodus;
während des Bewegungserfassungsmodus, Erzeugen einer aufgezeichneten Bewegung von Ausgabesignalen von dem Bewegungssensor (16 und 130D);
Empfangen einer Identifikation eines Kontakts aus der Vielzahl von Kontakten über die Benutzerschnittstelle (18);
Speichern, in dem Speicher (116, 118), einer Zuordnung zwischen dem einen Kontakt und der aufgezeichneten Bewegung; und
nach dem Starten eines aktiven Bildschirms von einer der Vielzahl von Anwendungen in Reaktion auf eine Anforderung von der Benutzerschnittstelle (18), bei Erfassen der aufgezeichneten Bewegung von Ausgabesignalen von dem Bewegungssensor (16 und 130D), Befüllen von Benutzereingabefeldern des aktiven Bildschirms der Anwendung mit Daten von ähnlichen Feldern des zugehörigen Kontakts, wobei die Benutzereingabefelder, die befüllt werden, abhängig sind von der gestarteten Anwendung und dem aktiven Bildschirm.

13. Vorrichtung gemäß Anspruch 12, wobei der Prozessor (28) weiter vorgesehen ist zum Überwachen der aufgezeichneten Bewegung nach einem Empfangen eines Bewegungswiedergabebefehls.

14. Computerlesbares Medium (116, 118), das computerlesbare Anweisungen speichert, die durch einen Prozessor (28) einer Computervorrichtung (10) ausführbar sind, um die Vorrichtung (10) zu veranlassen, alle Schritte des Verfahrens gemäß einem der Ansprüche 1 bis 11 zu implementieren.

## Revendications

1. Procédé destiné à faire fonctionner un dispositif (10) de communications mobiles sans fil sur lequel sont stockées plusieurs applications ayant des champs d'entrée utilisateur, le procédé comprenant le fait :
de générer un mouvement enregistré (320) à partir de signaux délivrés en sortie d'un capteur de mouvement (16 et 130D), après la réception (312) d'une commande de capture de mouvement à partir d'une interface utilisateur (18) ;
de recevoir une identification d'un contact à travers ladite interface utilisateur (18) ;
d'associer (324) ledit contact audit mouvement enregistré, ledit contact comprenant un enregistrement (206) d'un contact stocké avec un champ (212) de type nom et un champ (216A, 216B) de type numéro de téléphone et/ou un champ (220) de type courrier électronique ; et
après lancement de n'importe quelle application parmi ladite pluralité d'applications en réponse à une demande provenant de ladite interface utilisateur (18), en détectant ledit mouvement enregistré à partir de signaux délivrés en sortie dudit capteur de mouvement (16 et 130D), de remplir des champs d'entrée utilisateur d'un écran actif de ladite application avec des données provenant de champs similaires du contact associé, dans lequel les champs d'entrée utilisateur qui sont remplis dépendent de l'application lancée et de l'écran actif.

2. Procédé de la revendication 1 dans lequel ladite interface utilisateur (18) comprend au moins un commutateur (26) et dans lequel ladite commande de capture de mouvement comprend un signal commuté provenant d'un ou de plusieurs dudit au moins un commutateur (26).

3. Procédé de l'une quelconque des revendications précédentes comprenant en outre le fait de surveiller ledit mouvement enregistré après la réception d'une commande pour repasser le mouvement.

4. Procédé de la revendication 3 lorsqu'elle dépend de la revendication 2 dans lequel ladite commande pour repasser le mouvement comprend un signal commuté à partir d'un ou plusieurs dudit an moins un commutateur (26).

5. Procédé de l'une quelconque des revendications précédentes dans lequel des signaux délivrés en sortie dudit capteur de mouvement indiquent un mouvement dans un espace tridimensionnel.

6. Procédé de l'une quelconque des revendications précédentes comprenant en outre le fait de générer des signaux délivrés en sortie dudit capteur de mouvement sur la base d'un changement d'une image détectée par une caméra (16).

7. Procédé de l'une quelconque des revendications précédentes dans lequel l'une desdites applications est une application de courrier électronique, ledit écran actif est un écran (710) de composition de courrier électronique et ledit remplissage comprend le fait :
d'introduire une adresse de courrier électronique (218) stockée dans ledit contact dans un champ (714) de type destinataire dudit affichage de composition de courrier électronique (710).

8. Procédé de l'une quelconque des revendications précédentes comprenant en outre le fait :
d'afficher une liste de contacts, après la réception d'une demande d'affichage de contact de ladite interface utilisateur ;
de sélectionner (628) ledit contact à partir de ladite liste de contacts, en détectant ledit mouvement enregistré à partir de signaux délivrés en sortie dudit détecteur de mouvement (16 et 130D).

9. Procédé de l'une quelconque des revendications précédentes dans lequel l'une desdites applications est une application de lancement téléphonique, ledit écran actif est un écran pour l'entrée d'un numéro de téléphone est ledit remplissage comprend le fait d'introduire un numéro de téléphone (214A, 214B) stocké dans ledit contact dans un champ de type numéro de téléphone dudit écran d'entrée de numéro de téléphone.

10. Procédé de l'une des revendications précédentes dans lequel ledit enregistrement de contact (206) comprend en outre un champ de type adresse (224).

11. Procédé de la revendication 10 dans lequel l'une desdites applications est une application de traitement de texte, ledit écran actif est
un affichage de document vierge et ledit remplissage comprend le fait d'introduire un nom (210) stocké dans ledit champ de type nom de contact et une adresse (222) stockée dans ledit champ de type adresse pour ledit écran de document vierge formaté comme une adresse de destinataire pour une lettre.

12. Dispositif (10) de communications mobiles sans fil comprenant :
un détecteur de mouvement (16 et 130D) ;
une interface utilisateur (18) ;
une mémoire (116, 118) configurée pour stocker plusieurs applications ayant des champs d'entrée utilisateur, une pluralité de contacts, une pluralité de mouvements enregistrés et, pour chaque mouvement enregistré, une association entre ledit chaque mouvement enregistré et un contact de ladite pluralité de contacts, chacun de ladite pluralité de contacts comprenant un enregistrement (206) avec un champ (212) de type nom et un champ (216A, 216B) de type numéro de téléphone et/ou un champ (220) de type courrier électronique ;
un processeur (28) connecté de manière opérationnelle à une sortie dudit capteur de mouvement (16 et 130D) et couplé pour la communication avec ladite mémoire (116, 118) et avec ladite interface utilisateur (18), ledit processeur (28) est adapté pour :
faire entrer un mode de capture de mouvement, à la réception d'une commande de capture de mouvement de ladite interface utilisateur (18) ;
de générer un mouvement enregistré à partir de signaux délivrés en sortie dudit capteur de mouvement (16 et 130D) durant ledit mode de capture de mouvement ;
de recevoir une identification d'un contact de ladite pluralité de contacts à travers ladite interface utilisateur (18) ;
de stocker dans la mémoire (116, 118) une association entre ledit un contact et ledit mouvement enregistré ; et
après lancement d'un écran actif de n'importe quelle application parmi ladite pluralité d'application en réponse à une demande provenant de ladite interface utilisateur (18), en détectant ledit mouvement enregistré à partir de signaux délivrés en sortie dudit capteur de mouvement (16 et 130D), de remplir des champs d'entrée utilisateur d'un écran actif de ladite application avec des données provenant de champs similaires du contact associé, dans lequel les champs d'entrée utilisateur qui sont remplis dépendent de l'application lancée et de l'écran actif.

13. Dispositif de la revendication 12 dans lequel ledit processeur (28) est en outre adapté pour surveiller ledit mouvement enregistré après la réception d'une commande pour repasser le mouvement.

14. Support (116, 118) lisible par ordinateur stockant des instructions lisibles par ordinateur et exécutables par un processeur (28) d'un dispositif informatique (10) pour amener ledit dispositif (10) à exécuter toutes les étapes du procédé de l'une quelconque des revendications 1 à 11.
